(19) Europäisches Patentamt | European Patent Office | Office européen des brevets

(11) **EP 2 878 539 B1**

(12) **FASCICULE DE BREVET EUROPEEN**

(45) Date de publication et mention de la délivrance du brevet:
**28.10.2020 Bulletin 2020/44**

(51) Int Cl.:
***B64G 1/26*** *(2006.01)*      ***B64G 1/40*** *(2006.01)*

(21) Numéro de dépôt: **14194874.5**

(22) Date de dépôt: **26.11.2014**

(54) **SYSTÈME DE TUYÈRES ET PROCÉDÉ POUR LE CONTRÔLE D'ORBITE ET D'ATTITUDE POUR SATELLITE GÉOSTATIONNAIRE**

DÜSENSYSTEM UND VERFAHREN ZUR KONTROLLE DER UMLAUFBAHN UND DES VERHALTENS FÜR GEOSTATIONÄREN SATELLITEN

SYSTEM OF NOZZLES AND METHOD FOR ORBIT AND ATTITUDE CONTROL OF A GEOSTATIONARY SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2013 FR 1302782**

(43) Date de publication de la demande:
**03.06.2015 Bulletin 2015/23**

(73) Titulaire: **Thales**
**92400 Courbevoie (FR)**

(72) Inventeur: **Amalric, Joël**
**06150 CANNES-LA-BOCCA (FR)**

(74) Mandataire: **Marks & Clerk France**
**Immeuble "Visium"**
**22, avenue Aristide Briand**
**94117 Arcueil Cedex (FR)**

(56) Documents cités:
**WO-A2-92/09479    RU-C1- 2 124 461**
**US-A- 5 810 295**

## Description

### Domaine technique

La présente invention concerne de manière générale les systèmes de propulsion pour satellites géostationnaires, et en particulier un système de tuyères et un procédé pour le contrôle d'orbite et d'attitude pour satellite géostationnaire.

### Art antérieur

Pour le contrôle de leur orbite et de leur attitude, les satellites utilisent un ensemble d'actionneurs, et en particulier un ensemble de tuyères.

Le système de tuyères peut comprendre des tuyères à propulsion électrique ou des tuyères à propulsion chimique.

Dans des réalisations connues, le satellite comprend un système de tuyères hybride, incluant à la fois des tuyères à propulsion électrique et des tuyères à propulsion chimique. Ces tuyères sont utilisées séparément pour le maintien à poste du satellite. En particulier, les tuyères à propulsion électrique sont utilisées pour le contrôle hors du plan de l'orbite (généralement appelé « contrôle Nord-Sud »), tandis que les tuyères à propulsion chimique sont utilisées pour le contrôle dans le plan de l'orbite (appelé « contrôle Est-Ouest »), et pour les manœuvres de contrôle du vecteur moment cinétique (dé-saturation des roues à inertie). Un tel système hybride présente toutefois un rapport masse satellite mouillée lancée sur masse utile pour la charge utile et/ou la durée de vie opérationnelle du satellite qui n'est pas favorable.

Dans les satellites de nouvelle génération, on s'oriente de plus en plus vers des solutions « tout électrique » pour l'ensemble des éléments du satellite. Cette approche « tout électrique » peut permettre de gagner suffisamment en masse de sorte qu'un même lanceur peut embarquer deux satellites. Il en résulte des coûts moins importants pour le lancement des satellites. Des systèmes de tuyères ne comportant que des tuyères à propulsion électrique ont été ainsi proposés. Les tuyères électriques présentent une meilleure impulsion spécifique que les tuyères à propulsion chimique. Toutefois, ces systèmes de tuyères « tout électrique » nécessitent de prévoir dans le satellite des mécanismes additionnels d'orientation de la poussée à faible débattement angulaire (par exemple, de type mécanisme d'orientation de tuyères 2-axes) ou bien des mécanismes d'orientation de poussée à fort débattement angulaire (par exemple, de type bras articulé 2-axes, 3-axes ou plus). Cependant, ces mécanismes à grand débattement peuvent générer une complexité accrue de mise au point amenant à des défauts de parallélisme et /ou d'orthogonalité et posent des problèmes de fiabilité. Il en résulte un fonctionnement très dégradé en cas de perte fonctionnelle d'un mécanisme d'orientation. Par ailleurs, ils augmentent la masse totale du satellite, la complexité du logiciel bord, ainsi que le coût des équipements embarqués.

Le document WO 92/09479 qui décrit toutes les caractéristiques techniques du préambule de la revendication 1 est considéré comme le document de l'art antérieur le plus proche.

### Définition générale de l'invention

L'invention améliore la situation en proposant un système de tuyères pour un satellite destiné à être stabilisé en autorotation sur une orbite géostationnaire selon la revendication 1 ainsi qu'un procédé de contrôle d'orbite et d'attitude pour un satellite géostationnaire selon la revendication 19, le satellite comportant trois axes de référence X, Y et Z, l'axe Y représentant l'axe Nord/Sud et l'axe Z correspondant à une direction de pointage terre. Avantageusement, le système comprend un premier ensemble de tuyères configuré pour réaliser le maintien en poste du satellite, le premier ensemble comprenant un nombre pair de tuyères à propulsion électrique, à orientation préréglée, ledit nombre pair étant au moins égal à 4, les tuyères étant orientées selon trois composantes spatiales, et ayant deux à deux des signes de composantes X et Y différentes.

Selon une caractéristique de l'invention, la position des tuyères fixes peut être choisie de sorte que les tuyères passent au voisinage du centre de gravité du satellite en conservant un couple limité par rapport à la capacité des roues à inerties du satellite.

La position des tuyères peut être en outre choisie de manière à tenir compte du déplacement du centre de gravité du satellite pendant la durée de vie du satellite.

Selon une autre caractéristique de l'invention, le système de tuyère peut comprendre un deuxième ensemble de tuyères comprenant au moins deux tuyères à propulsion électrique, le deuxième ensemble de tuyères étant configuré pour réaliser au moins la mise en poste du satellite, et les tuyères du deuxième ensemble étant orientées sensiblement suivant le même axe satellite.

Dans une forme de réalisation de l'invention, chaque tuyère du premier ensemble peut former un angle d'in-clinaison $\theta$ choisi par rapport à l'axe Y.

Dans une autre forme de réalisation de l'invention, les tuyères du premier ensemble ont des angles d'inclinaison θ sensiblement identiques par rapport à l'axe Y.

En variante, les tuyères du premier ensemble peuvent avoir des angles d'inclinaison θ différents par rapport à l'axe Y.

Le premier ensemble de tuyères peut comprendre :

- une tuyère agencée sur l'arête délimitée par les faces Nord et Est de la caisse du satellite ; et/ou

- une tuyère agencée sur l'arête délimitée par les faces Sud et Est de la caisse du satellite ; et/ou

- une tuyère agencée sur la face Nord au voisinage de l'arête délimitée par les faces Nord et Ouest ; et/ou

- une tuyère agencée sur la face Sud au voisinage de l'arête délimitée par les faces Sud et Est de la caisse du satellite ; et/ou

- une tuyère agencée sur la face Est de la caisse du satellite, au voisinage de l'arête délimitée par les faces Sud et Est de la caisse du satellite ; et/ou

- une tuyère agencée sur la face Ouest de la caisse du satellite, au voisinage de l'arête délimitée par les faces Sud et Ouest de la caisse du satellite.

Selon une autre caractéristique de l'invention, les tuyères du premier ensemble sont non-coplanaires.

Dans un mode de réalisation de l'invention, au moins une des tuyères du premier ensemble forme un angle de pivotement σ par rapport au plan YZ.

En particulier, les tuyères du premier ensemble peuvent présenter des angles de pivotement σ respectifs par rapport au plan YZ différents.

Selon une caractéristique de l'invention, le premier ensemble de tuyères peut comprendre au moins une tuyère agencée au voisinage d'un coin externe de la caisse du satellite.

Selon un autre aspect de l'invention, le satellite peut comprendre des roues à inertie tandis que le premier ensemble de tuyères est utilisé pour réaliser le contrôle du vecteur du moment cinétique en cas de désaturation des roues à inertie.

L'invention propose en outre un procédé de contrôle d'orbite et d'attitude pour un satellite géostationnaire, comprenant un système de tuyères selon l'une des caractéristiques ci-dessus, le procédé comprenant l'allumage des tuyères du premier ensemble indépendamment les unes des autres pendant le maintien en poste.

Le maintien à poste peut être réalisé sur un nombre de jours de contrôle donné, et pour chaque jour de contrôle, le procédé peut comprendre le placement d'une tuyère du premier ensemble de tuyères à une position orbitale donnée, en appliquant une durée de poussée choisie de telle sorte que la correction nette des éléments orbitaux à la fin de la journée soit égale à un vecteur de correction cible.

Le procédé peut également comprendre l'activation des tuyères du deuxième ensemble de tuyères dans l'une au moins des phases suivantes parmi les phases de vie du satellite : repositionnement du satellite et la mise en orbite stable en fin de vie du satellite.

Selon une caractéristique de l'invention, le procédé peut comprendre l'allumage simultané des tuyères du deuxième ensemble de tuyères.

Le système de tuyères selon les modes de réalisation de l'invention permet ainsi de surmonter les inconvénients des systèmes de tuyères hybrides. En particulier, il ne nécessite pas d'emporter de sous-système à propulsion chimique ni d'ergols chimique dans le satellite, et le contrôle combiné Nord/Sud et Est/Ouest est plus efficace et plus économe en ergols.

Par ailleurs, contrairement aux systèmes de tuyères « tout électrique » classique, le système de tuyères selon les modes de réalisation de l'invention permet de se passer des mécanismes d'orientation de la poussée classiquement prévus dans le satellite. En outre, en cas de perte d'une tuyère à propulsion électrique, la mise à poste et le maintien à poste sont toujours faisables.

D'autres caractéristiques et avantages de l'invention apparaîtront à l'aide de la description qui suit et des figures des dessins annexés dans lesquels:

- la figure 1 est un schéma représentant un satellite en orbite;

- la figure 2 est un schéma représentant le système de tuyères selon un premier mode de réalisation de l'invention ;

- la figure 3 est un schéma représentant le système de tuyères selon un deuxième mode de réalisation de l'invention ; et

- La figure 4 est un organigramme représentant un procédé de contrôle du système de tuyères pour le maintien à poste et le contrôle du vecteur moment cinétique, selon une forme de réalisation de l'invention.

L'annexe A contient un ensemble de formules utilisées dans la description de certains modes de réalisation de l'invention.

Les dessins et les annexes à la description comprennent, pour l'essentiel, des éléments de caractère certain. Ils pourront donc non seulement servir à mieux faire comprendre la description, mais aussi contribuer à la définition de l'invention, le cas échéant.

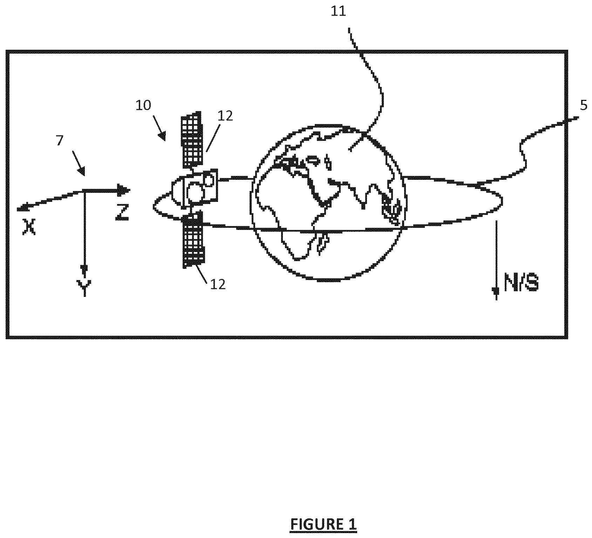

La figure 1 représente un exemple de satellite géostationnaire 10, comportant une plateforme équipée de panneaux solaires 12 et d'une charge utile comportant des antennes d'émission et de réception. Pour tout satellite 10 en orbite 5 autour de la terre 11, un repère de référence 7 lié au satellite est défini. Ce repère de référence est constitué par le trièdre orthonormé direct constitué par les axes X, Y et Z. Sur la figure 1, l'axe X correspond à une direction de vol sur une orbite autour de la Terre, l'axe Y est orienté Nord/sud, et l'axe de lacet Z est orthogonal au plan formé par les axes X et Y et correspond à une direction de pointage terre. Le satellite peut également comporter des équipements matériels et logiques dédiés à son fonctionnement, comme des roues à inertie intégrées dans la caisse du satellite (actuateurs pour le contrôle d'attitude), et un système de contrôle d'attitude et d'orbite.

Lorsque le satellite est stabilisé 3-axes, l'axe Z appelé axe de lacet est pointé vers la Terre, l'axe Y dit axe de tangage est perpendiculaire au plan de l'orbite, et l'axe X dit de roulis, est perpendiculaire aux axes Z et Y et de même sens que la vitesse linéaire instantanée du satellite sur son orbite, le sens de l'axe Y étant tel que le repère (X, Y, Z) soit direct.

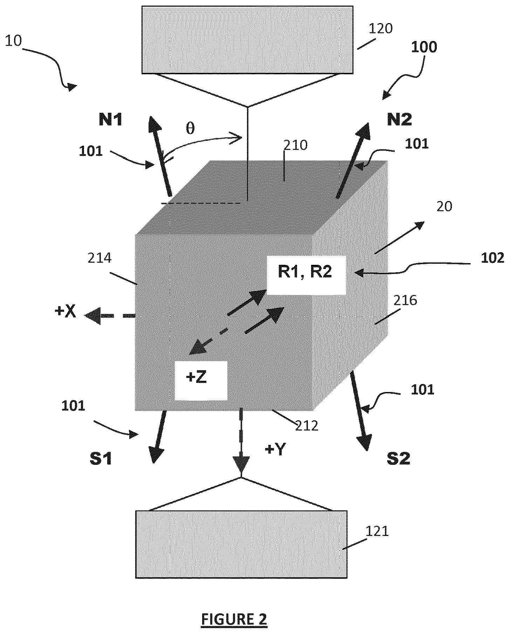

La figure 2 représente schématiquement un système de tuyères 100 selon un mode de réalisation de l'invention. La figure 2 montre schématiquement la caisse du satellite 20 sous la forme d'un parallélépipède rectangle. Les points d'attaches des panneaux solaires sur leur axe de rotation sont représentés sous la forme d'un rectangle, pour les panneaux solaires Nord 120 et les panneaux solaires Sud 121.

Selon un aspect de l'invention, le système de tuyères 100 selon l'invention comporte un nombre pair de tuyères à propulsion électrique qui ont une orientation préréglée avant le lancement du satellite. Sur la figure 2, le satellite est représenté comme vu par un observateur sur la ligne équatoriale terrestre près du point subsatellite (point d'intersection entre la surface terrestre et la ligne qui passe par le centre de la terre et le satellite).

En particulier, le système de tuyères 100 selon l'invention peut comprendre un premier ensemble de tuyères 101, comportant un nombre pair de tuyères au moins égal à 4 (par exemple 4, 6 ou 8). Les tuyères du premier ensemble 101 ont une orientation préréglée et généralement orientées dans une position proche du centre de masse du satellite. Dans une forme de réalisation préférée de l'invention les tuyères de l'ensemble 101 sont non-coplanaires. La suite de la description sera faite en référence à un premier ensemble de tuyères comportant 4 tuyères à titre non limitatif. Les 4 tuyères du premier ensemble sont notées ci-après N1, N2, S1 et S2. Les tuyères du premier ensemble 101 comprennent deux paires de tuyères de part et d'autre du plan XZ : la première paire de tuyères (N1, N2) est généralement dirigée vers le Nord (axe -Y) et la deuxième paire de tuyères (S1, S2) est généralement dirigée vers le Sud (axe +Y). Par ailleurs, les tuyères d'une même paire (par exemple N1 et N2) ont des composantes suivant l'axe Y de même signe et des composantes suivant l'axe X de signes opposés. Chaque tuyère forme en particulier un angle d'inclinaison θ choisi par rapport à l'axe Y. Ainsi les tuyères du premier ensemble de tuyères ont deux à deux des composantes selon l'axe X de signes opposés, ce qui permet la correction de tous les éléments orbitaux, et également d'avoir de la capacité en bras de levier ou en couple sur les différents axes du satellite. Les 4 tuyères du premier ensemble de tuyères 101 selon l'invention sont en particulier utilisées pour le maintien à poste, ou alternativement de manière combinée pour le maintien à poste et le contrôle du vecteur du moment cinétique. Chaque tuyère du premier ensemble de tuyères peut être allumée indépendamment des autres.

Selon un aspect de l'invention, la position des tuyères 101 peut être choisie de sorte que les tuyères passent au voisinage du centre de gravité du satellite en conservant un couple limité par rapport à la capacité des roues à inerties du satellite. La position des tuyères peut être en outre choisie de manière à tenir compte du déplacement du centre de gravité du satellite pendant la durée de vie du satellite.

Ainsi, le besoin en mécanisme de débattement pour le contrôle du vecteur cinétique est remplacé par un processus de préréglage au sol permettant d'éviter l'emport de mécanisme de débattement des tuyères à bord du satellite. Plus précisément, le préréglage au sol est effectué de sorte qu'il n'y ait plus de débattement à bord pendant les opérations de maintien à poste du satellite et pour le contrôle du vecteur moment cinétique.

Les tuyères du premier ensemble de tuyères 101 sont avantageusement préréglées avant le lancement du satellite, et ont une orientation fixe par rapport à la caisse du satellite 20.

En cas de panne de l'une des tuyères du premier ensemble de tuyères 101, il est possible selon l'invention d'utiliser toutes les tuyères du premier ensemble de tuyères (3 dans le mode de réalisation illustré) pour le maintien à poste, ou seulement certaines d'entre elles, en cas de panne d'une tuyère, sur la base d'une autre stratégie de maintien à poste et d'une évaluation de la perte d'efficacité.

Le système de tuyères 100 peut en outre comprendre un deuxième ensemble de tuyères 102 comportant au moins deux tuyères fixes pour les autres phases du cycle de vie du satellite (par exemple 2, 3 ou 4 tuyères fixes), notamment la mise en orbite, l'insertion sur orbite finale, le repositionnement en longitude et la mise en orbite cimetière en fin de vie opérationnelle. Les tuyères du deuxième ensemble de tuyères 102 sont orientées sensiblement suivant le même axe satellite, par exemple l'axe de lacet Z. La suite de la description sera faite en référence à un deuxième ensemble de tuyères 102 comportant deux tuyères, notées R1 et R2, à titre d'exemple non limitatif. Selon une autre caractéristique de l'invention, toutes les tuyères du deuxième ensemble de tuyères peuvent être allumées simultanément.

Le système de tuyères 100 selon l'invention est adapté pour toutes les phases de la vie du satellite, et notamment :

- la phase de mise à poste, qui correspond à la période depuis l'injection par le lanceur jusqu'au ralliement de la position définitive du satellite;
- la phase de maintien à poste, qui correspond à la phase d'opération nominale du satellite;
- la phase de secours, le cas échéant, qui correspond à une panne et pendant laquelle l'altitude du satellite peut être modifiée ; et
- la phase de désactivation ou désorbitation, au cours de laquelle le satellite est envoyé sur une orbite dite cimetière.

Pour la mise en orbite, le vecteur de poussée résultant associé aux tuyères du deuxième ensemble 102 (les tuyères du deuxième ensemble de tuyères sont avantageusement allumées simultanément) est aligné avec la direction souhaitée pour le vecteur de poussée, comme calculé par un dispositif d'optimisation de trajectoire à faible poussée, implanté au sol ou à bord. Un système de guidage d'attitude sur trois axes et de pilotage des panneaux solaires en rotation est alors utilisé dans ce cas.

Pour l'insertion sur orbite finale, le repositionnement en longitude, la mise en orbite cimetière, le vecteur de poussée résultant associé aux tuyères du deuxième ensemble 102 est aligné le long de la trajectoire, c'est-à-dire sensiblement parallèlement par rapport au vecteur vitesse du satellite dans la direction tangentielle souhaitée (+/- S). Une manœuvre de pivotement en rotation (« yaw slew » en langue anglo-saxonne) de +/- 90 degrés peut être nécessaire pour atteindre une attitude par rapport au pointage en mode normal, et une manœuvre de rotation dans le sens opposé, de -/+ 90 degrés pour revenir au pointage en mode normal.

En cas de panne de l'une des tuyères électro-propulsées du deuxième ensemble de tuyères 102, les tuyères restantes sont allumées. L'impact de premier ordre sur le temps de poussée est le double, tandis que l'impact sur la consommation de propergol (ou de façon équivalente sur l'incrément de vitesse Delta-V) est alors négligeable.

Les angles d'inclinaison θ et de pivotement σ des tuyères coplanaires du premier ensemble de tuyères 101, ainsi que le nombre global des tuyères 101 et 102 peuvent être réglés avant le lancement du satellite, par exemple au moyen d'un simulateur de sorte que :

- le premier ensemble de tuyères 101 soit utilisé pour le maintien en poste, incluant le contrôle d'orbite et le contrôle du vecteur moment cinétique ;
- le deuxième ensemble de tuyère 102 soit utilisé pour la mise à poste et les autres phases de vie du satellite.

Après le lancement du satellite, les tuyères peuvent ensuite conserver l'orientation initialement fixées. Ainsi, avec le système de tuyères 100 selon l'invention, il n'est pas nécessaire de prévoir de mécanisme de réglage additionnel pour réajuster l'orientation des tuyères en cours de vol. Il en résulte un gain de masse important dans le satellite et une réduction du coût global du satellite.

Pour un fonctionnement efficace, les tuyères à propulsion électrique doivent être sensiblement alignées avec le centre de masse du satellite à des instants prédéfinis pendant la durée de vie opérationnelle (par exemple, alignement quart de vie, alignement milieu de vie, alignement tiers de vie). Aussi, les tuyères du système 10 selon l'invention peuvent être réglées de manière à être sensiblement alignées avec le centre de masse du satellite, avant le lancement du satellite. Un tel agencement des tuyères du premier ensemble 101 et leur utilisation pour la phase de maintien à poste permet ainsi de minimiser les couples au cours de la durée de vie opérationnelle du satellite.

De manière avantageuse, la même technologie de tuyères à propulsion électrique peut être utilisée pour les deux ensembles de tuyères 101 et 102, mais en différents points d'utilisation.

En particulier, les tuyères du deuxième ensemble 102 (R1 et R2) peuvent être choisies sur des points de fonctionnement différents de la puissance électrique fournies à la cathode des tuyères électro-propulsées, et de façon compatibles avec le bilan de puissance du satellite. Il en résulte une poussée plus élevée avec une impulsion spécifique plus basse que pour le premier ensemble de tuyères 101 que pour le deuxième ensemble de tuyères 102.

En variante, les tuyères du premier ensemble 101 (N1, N2, S1, S2) peuvent être choisies de manière à avoir une poussée plus faible avec une impulsion spécifique plus élevée que les tuyères du deuxième ensemble 102.

Il est toutefois possible, sans sortir du cadre de la présente invention, d'utiliser des tuyères pour le premier ensemble 101 ayant une technologie différente de celles du deuxième ensemble de tuyères 102, par exemple une technologie basée sur l'utilisation d'un moteur à poudre éjectable.

Le choix de ces proportions relatives des paramètres poussée/impulsion spécifique pour chaque ensemble de tuyères 101 et 102 peut avoir un effet différent selon la phase de vie du satellite. En particulier :

- Pour une mise en orbite, le nombre de tuyères implantées ainsi que la puissance électrique fournie peuvent permettre d'obtenir un temps de transfert raisonnable, typiquement de 2 à 6 mois (en fonction du client et du véhicule de lancement choisi), au prix de combustible additionnel ;
- Pour l'insertion sur orbite finale, le repositionnement en longitude, le positionnement en fin de vie, les proportions choisies permettent d'obtenir une accélération en poussée suffisante pour mettre en sécurité la zone utilisée autour de l'anneau GEO sans entrer dans la fenêtre Est/Ouest voisine (en considérant une séparation radiale de +/- 40 km, et une fenêtre longitudinale et latitudinale de +/- 70 km ou +/- 0.05 degrés) ; et
- Pour le maintien en poste, les proportions choisies peuvent permettre d'obtenir une impulsion spécifique suffisante et limiter la consommation de combustible pour un coût donné en Delta-V.

Come cela est connu en soi, l'impulsion spécifique (notée généralement $I_{sp}$) est représentative de l'efficacité d'un système de propulsion. Elle est définit comme un quotient de deux grandeurs, l'une représentant la poussée d'un propulseur, et l'autre représentant le produit du débit massique de propergol par la valeur normale de l'accélération de la pesanteur (ou débit-poids du propergol éjecté). L'impulsion spécifique indique la durée pendant laquelle un kilogramme de propergol produit une poussée permettant de déplacer une masse d'un kilogramme (soit une force d'environ 9,81 N) dans le champ gravitationnel terrestre.

Le paramètre Delta-V désigne quant à lui la mesure de changement (Delta ou $\Delta$) de vitesse du satellite. Il est exprimé en distance parcourue par unité de temps (mètre par seconde) et est calculé en soustrayant la vitesse avant le changement à la vitesse après le changement, ou en intégrant le module de l'accélération due à la poussée pendant la durée de la manœuvre. Le Delta-V peut être utilisé pour estimer la quantité de propergol qui est nécessaire pour accomplir une manœuvre, un changement de trajectoire, pour atteindre une destination éloignée

Le système de tuyères 100 présente l'avantage de ne pas nécessiter de sous-système de propulsion chimique additionnel. Bien qu'un tel sous-système n'est pas requis, l'invention est compatible avec l'utilisation d'un tel sous-système : par exemple le propergol Xénon pourrait être utilisé en tant que gaz froid (avec une impulsion spécifique très faible) pour de très rares événements pendant la durée de vie du satellite, comme un événement FDIR (acronyme pour l'expression anglo-saxonne « Failure Détection Isolation and Recovery » signifiant « Détection et Correction d'anomalie en vol »), qui nécessite un faible Delta-V (d'un ordre de magnitude de un à quelques m/sec).

Les tuyères N1, N2, S1 et S2 du premier ensemble de tuyères 101 selon le premier mode de réalisation de l'invention peuvent être disposées sur les faces Nord (210), Sud (212), Est (214) et Ouest (216) du satellite de plusieurs manières, en particulier :

- Sur l'arête délimitée par les faces Nord 210 et Est 214 (tuyère N1) et/ou sur l'arête délimitée par les faces Sud 212 et Est 214 (tuyère S2),
- Sur la face Nord 210 au voisinage de l'arête délimitée par les faces Nord 210 et Ouest 216 (tuyère N2), et/ou sur la face Sud 212 au voisinage de l'arête délimitée par les faces Sud 212 et Est 214 (tuyère S1).

Elles peuvent également être disposées sur la face Est 214 au voisinage de l'arête délimitée par les faces Sud 212 et Est 216 (pour la tuyère S1), et/ou sur la face Ouest 216 au voisinage de l'arête délimitée par les faces Sud 212 et Ouest 216 (tuyère S2).

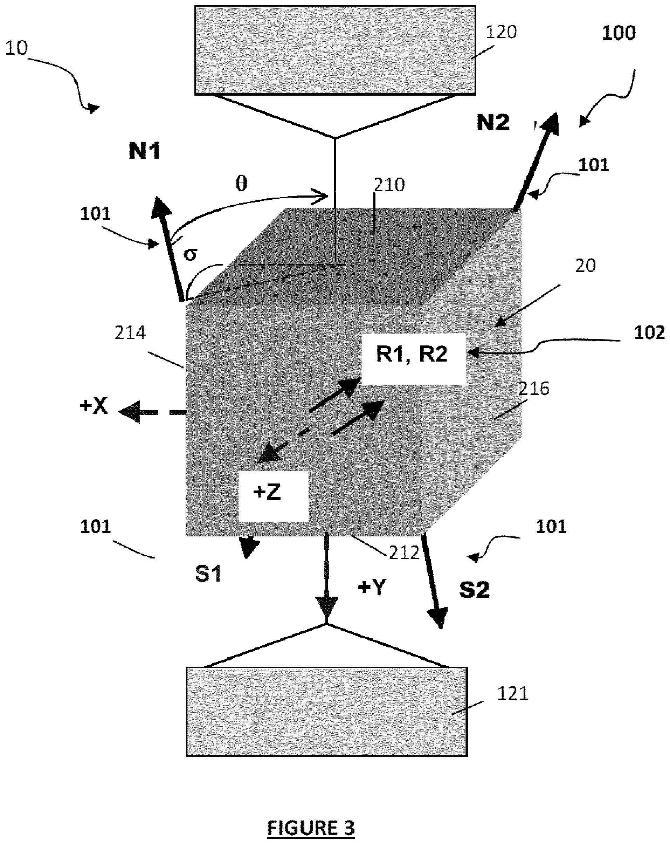

Une telle configuration se situe sensiblement dans le plan fixe YZ de la caisse du satellite. En complément, des composants +/- X peuvent être ajoutés sur chaque tuyère à propulsion électrique pour donner une capacité de contrôle d'attitude suivant trois axes. Dans le cas de composants +/- X additionnels, les 4 tuyères à propulsion électrique de l'ensemble 101 qui sont utilisées pour le maintien en station peuvent être agencées près des coins de la caisse du satellite 20, dans une configuration « transversale » selon un deuxième mode de réalisation de l'invention comme représenté sur la figure 3.

Le système de coordonnées utilisé classiquement en mécanique orbitale pour les équations de mouvement est le système RSW où :

- R désigne la direction radiale du centre de la Terre vers le satellite,
- S = W x R est la direction tangentielle proche de la direction de la vitesse du satellite, et
- W désigne la direction du vecteur moment orbital (hors du plan).

La stabilisation d'un satellite 10 suivant trois axes (le satellite est alors dit "stabilisé 3-axes") consiste à maintenir le repère (X, Y, Z) lié au satellite au plus proche voisinage du repère de référence (R, W, S), en choisissant X=+S, Y=-W, et Z=-R.

Sur orbite opérationnelle (GEO), le satellite est dans un mode dit normal (stabilisé 3-axes) de sorte que la direction de la poussée des tuyères électro-propulsées à corps fixe est fixée dans le système de coordonnées orbital local.

La direction d'axe des tuyères électro-propulsées est donnée par son azimut « $Az_{ZX/Y}$ » et son Elévation « $El_{ZX/Y}$ » dans le système de coordonnées du corps fixe du satellite, comme mesuré de +Z à +X selon +Y.

La direction du vecteur de poussée pour des tuyères électro-propulsées est donnée par le vecteur suivant, d'une part dans le système de coordonnées du corps fixe du satellite, XYZ, et d'autre part dans le système de coordonnées orbital local RSW :

$$\vec{e}_{thrust} = \begin{bmatrix} -\cos El \sin Az \\ -\sin El \\ -\cos El \cos Az \end{bmatrix}_{XYZ} = \begin{bmatrix} -\cos El \cos Az \\ -\cos El \sin Az \\ +\sin El \end{bmatrix}_{RSW}$$

Dans la suite de la description, les notations suivantes pourront être utilisées pour désigner les tuyères du premier ensemble 101 :

NE pour désigner la tuyère N1 ;
NW pour désigner la tuyère N2,
SE pour désigner la tuyère S1, et
SW pour désigner la tuyère S2.

L'homme du métier comprendra que les notations (NE, NW, SE, SW) pour les tuyères du premier ensemble 101 ne sont pas limitatives et sont utilisées seulement par convention pour faciliter la description de certains modes de réalisation de l'invention.

La matrice de configuration $C_{sk}$ de dimensions 3 par 4 représente la direction du vecteur de poussée des quatre tuyères électro-propulsées (EP) dans le système de coordonnées orbital local, RSW :

$$C_{sk} = [\vec{e}_{NE} : \vec{e}_{NW} : \vec{e}_{SE} : \vec{e}_{SW}]_{RSW}$$

Dans la description ci-après, la matrice de configuration et sa signature seront décrits en détail pour trois modes de réalisation préférés de l'invention.

Le système de tuyères à propulsion électrique 100 de la figure 2 correspond à une configuration minimale symétrique dans un seul plan.

Dans cette configuration, les quatre tuyères à propulsion électrique ont deux à deux des signes de composantes opposées et présente un angle d'inclinaison θ sensiblement identique par rapport l'axe Nord/sud. Les quatre tuyères n'ont pas de composante radiale selon l'axe Z:

L'élévation $El_{ZX/Y}$ et l'azimut $Az_{ZX/Y}$ pour chacune des tuyères dans ce premier mode de réalisation de l'invention sont donnés par la matrice suivante :

| | NE | NW | SE | SW |
|---|---|---|---|---|
| $El_{ZX/Y}$ | $-(90°-\theta)$ | $-(90°-\theta)$ | $+(90°-\theta)$ | $+(90°-\theta)$ |
| $Az_{ZX/Y}$ | 90° | 270° | 90° | 270° |

Les tuyères sont ici énumérées dans un ordre choisi uniquement par convention (NE, NW, SE et SW) et qui sera utilisé dans la suite de la description. L'homme du métier comprendra que cet ordre n'est en aucun cas limitatif mais est choisi de manière à faciliter la description ci-après.

La matrice de configuration $C_{sk}$ correspondant à ce système de tuyères est alors :

$$C_{SK} = \begin{bmatrix} 0 & 0 & 0 & 0 \\ -\sin\theta & +\sin\theta & -\sin\theta & +\sin\theta \\ -\cos\theta & -\cos\theta & +\cos\theta & +\cos\theta \end{bmatrix}_{RSW}$$

Il en résulte la signature suivante :

$$\operatorname{sgn} C_{SK} = \begin{bmatrix} 0 & 0 & 0 & 0 \\ - & + & - & + \\ - & - & + & + \end{bmatrix}_{RSW}$$

La matrice de configuration donne les orientations des vecteurs poussée des différentes tuyères dans le repère satellite. Sa signature donne les signes des composantes du vecteur poussée pour chaque tuyère (« 0 » pour composante nulle, « + » pour composante positive, «-» pour composante négative).

La figure 3 représente le système de tuyères 100 selon un deuxième mode de réalisation de l'invention. Dans ce deuxième mode de réalisation de l'invention, l'ensemble de tuyères 101 a une configuration de tétraèdre régulier.

Dans ce deuxième mode de réalisation, le premier ensemble de tuyères N1, N2, S1 et S2 (respectivement désignées sur cette figure par NE, NW, SE et SW) comporte quatre tuyères à propulsion électrique non-coplanaires (axe Nord/Sud) qui forment chacune un angle d'inclinaison $\theta$ par rapport à l'axe Y, sensiblement égal, et un angle de pivotement $\sigma$ par rapport au plan XY. Les tuyères on deux à deux des signes de composantes opposés, ce qui permet le contrôle de tous les éléments orbitaux et d'avoir de la capacité en couple.

En particulier, l'angle d'inclinaison $\theta$ par rapport à l'axe Y peut être compris entre 40 et 45 degrés tandis que l'angle de pivotement $\sigma$ par rapport au plan XY peut être compris entre 10 et 20 degrés.

L'élévation $El_{ZX/Y}$ et l'azimut $Az_{ZX/Y}$ pour chacune des tuyères du premier ensemble de tuyère 101 sont donnés par la matrice suivante conformément à ce deuxième mode de réalisation de l'invention :

$$\begin{array}{ccccc} & NE & NW & SE & SW \\ El_{ZX/Y} & -(90°-\theta) & -(90°-\theta) & +(90°-\theta) & +(90°-\theta) \\ Az_{ZX/Y} & 90°+\sigma & 270°-\sigma & 90°-\sigma & 270°+\sigma \end{array}$$

La matrice de configuration $C_{sk}$ correspondante est alors :

$$C_{SK} = \begin{bmatrix} +\sin\theta\sin\sigma & +\sin\theta\sin\sigma & -\sin\theta\sin\sigma & -\sin\theta\sin\sigma \\ -\sin\theta\cos\sigma & +\sin\theta\cos\sigma & -\sin\theta\cos\sigma & +\sin\theta\cos\sigma \\ -\cos\theta & -\cos\theta & +\cos\theta & +\cos\theta \end{bmatrix}_{RSW}$$

La signature correspondante dans le repère RSW est pour cette matrice de configuration :

$$\operatorname{sgn} C_{SK} = \begin{bmatrix} + & + & - & - \\ - & + & - & + \\ - & - & + & + \end{bmatrix}_{RSW}$$

L'homme du métier comprendra aisément que le premier mode de réalisation de l'invention correspond à une application du deuxième mode de réalisation avec $\sigma$=0.

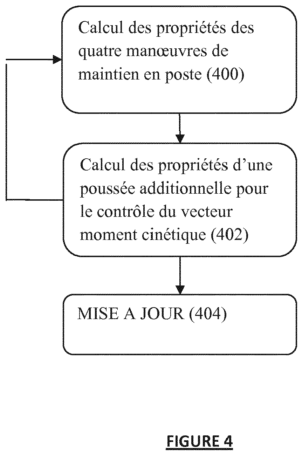

La figure 4 représente le système de tuyères 100 selon un troisième mode de réalisation de l'invention. Dans ce troisième mode de réalisation de l'invention, le système de tuyères a une configuration tétraèdre non-régulier.

Dans cette configuration, le premier ensemble de tuyères 101 comporte quatre tuyères à propulsion électrique N1, N2, S1 et S2 (respectivement désignées sur cette figure par NE, NW, SE et SW) deux à deux symétriques par rapport à l'axe Y (axe Nord/Sud) qui forment chacune des angles d'inclinaison $\theta i$ par rapport à l'axe Y, et des angles de pivotement σi respectifs par rapport au plan XY. L'angle σi représente l'angle de rotation en tournant autour de Y de X vers Z. Sur la figure 3, l'angle σi est par exemple positif pour la tuyère N1.

Selon ce troisième mode de réalisation, les quatre tuyères NE, NW, SE et SW du premier ensemble de tuyères 101 ont des angles d'inclinaison respectifs $\theta_{NE}$, $\theta_{NW}$, $\theta_{SE}$, $\theta_{SW}$ différents et des angles de pivotement $\sigma_{NE}$, $\sigma_{NW}$, $\sigma_{SE}$, $\sigma_{SW}$ respectifs différents.

L'élévation $El_{ZX/Y}$ et l'azimut $Az_{ZX/Y}$ pour chacune des tuyères du premier ensemble de tuyères 101 sont donnés par la matrice suivante conformément à ce troisième mode de réalisation de l'invention :

$$
\begin{array}{ccccc}
 & NE & NW & SE & SW \\
El_{ZX/Y} & -(90° - \theta_{NE}) & -(90° - \theta_{NW}) & +(90° - \theta_{SE}) & +(90° - \theta_{SW}) \\
Az_{ZX/Y} & 90° + \sigma_{NE} & 270° - \sigma_{NW} & 90° - \sigma_{SE} & 270° + \sigma_{SW}
\end{array}
$$

La matrice de configuration $C_{sk}$ correspondant à ce troisième mode de réalisation est alors :

$$
C_{SK} = \begin{bmatrix}
+\sin\theta_{NE}\sin\sigma_{NE} & +\sin\theta_{NW}\sin\sigma_{NW} & -\sin\theta_{SE}\sin\sigma_{SE} & -\sin\theta_{SW}\sin\sigma_{SW} \\
-\sin\theta_{NE}\cos\sigma_{NE} & +\sin\theta_{NW}\cos\sigma_{NW} & -\sin\theta_{SE}\cos\sigma_{SE} & +\sin\theta_{SW}\cos\sigma_{SW} \\
-\cos\theta_{NE} & -\cos\theta_{NW} & +\cos\theta_{SE} & +\cos\theta_{SW}
\end{bmatrix}_{RSW}
$$

La signature résultante est la suivante :

$$
\text{sgn}\, C_{SK} = \begin{bmatrix}
+ & + & - & - \\
- & + & - & + \\
- & - & + & +
\end{bmatrix}_{RSW}
$$

L'homme du métier comprendra aisément que le premier mode de réalisation de l'invention correspond à une application particulière du deuxième mode de réalisation avec $\theta_{NE} = \theta_{NW} = \theta_{SE} = \theta_{SW} = \theta$ et des angles de pivotement $\sigma_{NE} = \sigma_{NW} = \sigma_{SE} = \sigma_{SW} = \sigma$.

Le satellite mis en orbite est soumis à diverses forces perturbatrices qui peuvent modifier les caractéristiques de son orbite, comme le frottement atmosphérique, provoqué par l'atmosphère terrestre résiduelle à l'altitude de satellite, qui induit un freinage du satellite, ou encore les attractions combinées du Soleil et de la Lune qui ont pour effet de diminuer l'inclinaison du plan orbital sur l'équateur.

Le maintien à poste a pour but de conserver les caractéristiques de l'orbite afin de permettre au satellite de remplir correctement sa mission.

Le maintien à poste se déroule typiquement 4 ou 5 jours par semaine au moyen de manœuvres de maintien à poste. Au besoin, les tuyères à propulsion électrique peuvent également être mises en fonctionnement sur une base quotidienne (7 jours par semaine). L'homme du métier comprendra aisément que ces fréquences relatives au maintien à poste sont données à titre d'exemple non limitatif.

Le vecteur $\Delta\vec{\alpha}$ suivant est utilisé pour désigner les corrections cibles des perturbations naturelles qui agissent sur l'orbite géostationnaire corrections à la fin de la journée, exprimés dans les éléments orbitaux équinoxiaux (éléments non singuliers pour l'orbite circulaire et équatoriale) :

$$
\Delta\vec{\alpha}^{T} = \begin{bmatrix} \Delta a & \Delta e_x & \Delta e_y & \Delta i_x & \Delta i_y \end{bmatrix}
$$

Les éléments orbitaux équinoxiaux comprennent :

- l'élément a représentant le Demi-grand Axe ;
- les éléments ex et ey représentant les vecteurs excentricité ; et
- les éléments ix et iy représentant les vecteurs inclinaison.

Les paramètres Δa, Δex, Δey, Δix et Δiy désignent les corrections cible des éléments orbitaux équinoxiaux a, ex, ey, ix et iy respectivement, à la fin du cycle hebdomadaire de maintien à poste.

Le vecteur $\Delta V$ désigne le coût de contrôle en incrément de vitesse des éléments orbitaux équinoxiaux indépendamment les uns des autres :

$$\Delta \vec{V}^T = \begin{bmatrix} \Delta Va & \Delta Ve_x & \Delta Ve_y & \Delta Vi_x & \Delta Vi_y \end{bmatrix} = \begin{bmatrix} \dfrac{V}{2}\dfrac{\Delta a}{a} & \dfrac{V}{2}\Delta e_x & \dfrac{V}{2}\Delta e_y & V\Delta i_x & V\Delta i_y \end{bmatrix}$$

Où V représente la vitesse de l'orbite géostationnaire.

Dans la stratégie de maintien en poste selon l'invention, il est prévu, pour chacun des 4 ou 5 jours de contrôle, d'allumer chaque tuyère parmi les tuyères du premier ensemble 101 une fois pour le maintien à poste, à différentes positions orbitales, et en appliquant différentes durées de poussée de telle sorte que la correction nette des éléments orbitaux à la fin de la journée soit égale au vecteur $\overrightarrow{\Delta\infty}$.

L'application de la stratégie de maintien à poste selon l'invention, sans considérer les erreurs éventuelles, donne le coût annuel $\Delta V_{sk}$ suivant pour le contrôle de maintien à poste en termes d'incrément de vitesse:

$$\Delta V_{SK} \cong \frac{\sqrt{\Delta Vi_x^2 + \Delta Vi_y^2}}{\overline{\cos\theta}}$$

Dans cette expression, « $\overline{\cos\theta}$ » désigne la perte cosinus moyenne due aux angles d'inclinaison $\theta$ des quatre tuyères du premier ensemble 101 utilisées pour le maintien à poste.

L'ensemble de tuyères 101 selon les modes de réalisation de l'invention permet de corriger les 5 éléments orbitaux équinoxiaux si la condition suivante relative aux angles d'inclinaison $\theta$ des 4 tuyères N1, N2, S1 et S2 est satisfaite :

$$\theta \geq \theta_{min} \qquad \theta_{min} = \arctan\frac{\sqrt{\Delta Ve_x^2 + \Delta Ve_y^2}}{\sqrt{\Delta Vi_x^2 + \Delta Vi_y^2}}$$

La valeur de $\theta_{min}$ peut être de 5-10 degrés.

La valeur maximale de $\sqrt{\Delta Vi_x^2 + \Delta Vi_y^2}$ peut être de 52 m/sec par année de contrôle. Cette valeur représente le coût de correction de la dérive séculaire due à l'effet luni-solaire.

Comme on le sait, les satellites doivent conserver, quelle que soit leur trajectoire ou leur orbite, une attitude bien précise, pour assurer, selon leur mission, la bonne orientation de leurs antennes, de leurs panneaux solaires, des instruments scientifiques placés à bord. L'attitude désigne ainsi l'orientation angulaire du satellite. L'attitude du satellite est généralement contrôlée par des actuateurs internes tels que des roues d'inertie permettant d'appliquer un couple interne à l'engin spatial et de provoquer une rotation autour de l'un de ses axes X, Y, Z, les axes X, Y, Z se référant au trièdre de référence lié à l'engin spatial. Or l'engin spatial a tendance à se dépointer sous l'action de couples perturbateurs produits par l'environnement tels que la pression solaire, des forces de frottement aérodynamiques, des couples électromagnétiques, des couples dus au gradient de gravité. Il faut donc contrôler activement l'orientation angulaire de l'engin spatial et assurer une stabilité de cette orientation selon ses trois axes. Le contrôle d'attitude est assuré en permanence par une boucle d'asservissement comportant des capteurs qui mesurent l'orientation de l'engin spatial, un calculateur de bord qui traite ces mesures et établit les commandes qui sont exécutées par un ou plusieurs actuateurs pour contrebalancer les dérives et maintenir une orientation dans une direction choisie. Cependant, à chaque fois que les roues fournissent un couple interne, leur vitesse augmente jusqu'à atteindre une vitesse maximale appelée vitesse de saturation. Lorsque la vitesse maximale est atteinte, les roues d'inertie ne peuvent plus réaliser la compensation des dérives et le calculateur de bord engage alors une opération de désaturation des roues (appelé « wheels unloading » en langue anglo-saxonne). A haute altitude ou en orbite géostationnaire GEO (acronyme pour l'expression anglaise correspondante « Geosynchronous Earth Orbit »), l'allumage des tuyères à propulsion électrique de l'ensemble 101, prévu dans le cadre du maintien en poste selon l'invention, peut également être utilisé pour contrôler le vecteur moment cinétique, et réaliser ainsi la désaturation des roues à inertie. Il permet également de concevoir un plan de manœuvre orbitale qui garantisse de rester dans le domaine des roues à inertie.

Dans cette forme de réalisation selon l'invention, les tuyères de l'ensemble 101 sont ainsi conjointement utilisées pour le maintien à poste et le contrôle du vecteur moment cinétique.

La figure 4 est un organigramme représentant les différentes étapes mises en œuvre pour le maintien à poste et le contrôle du vecteur moment cinétique selon une forme de réalisation de l'invention.

A l'étape 400, les propriétés des quatre manœuvres journalières de maintien en poste sont calculées sans prendre en compte le contrôle du vecteur moment cinétique. Ce calcul peut être mis en œuvre selon les équations A1 et A2 de l'annexe A, dans l'exemple de configuration de tuyères de la figure 3. La configuration de la figure 3 est une configuration de tuyères symétrique agencée dans un plan unique (même angle d'inclinaison pour les 4 tuyères et sans composante radiale le long de l'axe Z).

Plus précisément, pour calculer les propriétés des 4 manœuvres impulsionnelles, le système d'équations de l'annexe A1 peut être résolu (connu sous le nom d'équations de Gauss pour les éléments d'orbite équinoxiaux).

Le système d'équations peut être écrit sous la forme de la matrice A2 de l'annexe A de dimensions 4 sur 5 où V désigne la vitesse de l'orbite géostationnaire.

Un tel système d'équations peut être résolu numériquement en utilisant un solveur d'optimisation non-linéaire. Les variables de décision représentent l'amplitude des 4 manœuvres impulsionnelles ($\Delta V_{NE}, \Delta V_{NW}, \Delta V_{SE}, \Delta V_{SW}$) et la position des quatre manœuvres impulsionnelles ($L_{NE}, L_{NW}, L_{SE}, L_{SW}$) exprimée dans l'ascension droite du satellite, i.e. le 6ème élément orbital équinoxial.

L'homme du métier notera que, dans les équations A1 et la matrice A2 de l'annexe A, les manœuvres impulsionnelles sont considérées. Toutefois, en variante, des manœuvres à poussée étalées peuvent être considérées pour ce calcul, en utilisant la relation A4 de l'annexe A qui donne la durée $\Delta t_{burn}$ finie de l'intervalle de poussée (« burn » en langue anglo-saxonne) des quatre poussées en fonction de impulsion de vitesse $\Delta V_{burn}$ de l'intervalle de poussée, de la masse m du satellite et de la poussée F de l'engin à propulsion électrique. Le procédé prévoit de calculer la durée de chaque manœuvre à partir de la connaissance du Delta-V et de la masse du satellite, dans la forme de réalisation où on considère les manœuvres impulsionnelles. Les manœuvres impulsionnelles désignent les poussées de très courte durée et délivrant une impulsion de vitesse $\Delta V$ fournie durant un temps très court. La poussée correspondante s'effectue pendant un temps négligeable devant la période de l'orbite.

A l'étape 402, les propriétés d'une poussée additionnelle pour le contrôle du vecteur moment cinétique sont calculées, sans chevauchement avec les quatre intervalles de poussées planifiées au préalable.

L'étape 402 introduit ainsi une poussée additionnelle pour le contrôle du vecteur moment cinétique.

Les étapes 400 et 402 sont ensuite itérées pour tenir compte de l'effet de l'introduction d'une poussée additionnelle (étape 402) et du changement des caractéristiques des manœuvres sur la correction des éléments orbitaux.

A l'étape 404, les propriétés des 4 manœuvres de maintien en poste et de la poussée additionnelle sont mises à jour (par exemple, en modifiant le temps initial et le temps final de poussée) afin de satisfaire les deux objectifs. L'homme du métier comprendra aisément que la manœuvre additionnelle n'est pas nécessaire tous les jours de manœuvre.

Un tel procédé converge vers une solution « faisable » du contrôle combiné (maintien à poste et vecteur moment cinétique). Lorsqu'elle est comparée à la solution de maintien en poste seule, la solution de contrôle combiné (maintien à poste et contrôle du vecteur moment cinétique) est caractérisée par une poussée additionnelle et par un coût Delta-V additionnel. Il est également possible selon l'invention de résoudre directement dans une étape unique le problème combiné des deux objectifs (comme explicité dans l'annexe A). Le nombre total des variables de décision est alors de :

5 (éléments orbitaux) + 3 (composantes du vecteur moment cinétique) =8.

Le nombre total d'inconnues est ainsi de 8 (positions et delta-V de chaque manœuvre journalière). Le problème combiné peut alors être qualifié de carré, c'est-à-dire non sous-déterminé et non sur-déterminé. Plusieurs solutions peuvent être trouvées pour le problème de maintien en poste.

Un tel problème peut alors être résolu notamment en utilisant une routine des moindres carrés non linéaire.

Si l'on rajoute une poussée additionnelle, le nombre total d'inconnu devient 10 (5*2). Le problème devient alors sous-déterminé. Parmi les solutions possibles, celles qui ont un coût Delta-V minimal sont préférées. Un tel problème peut alors être résolu en utilisant une routine d'optimisation numérique, la fonction objectif à minimiser étant la masse d'ergol consommé ou de façon équivalente la somme des modules Delta-V. La fonction d'objectif pour minimiser la somme des amplitudes des 4 poussées est donnée par l'équation A3 de l'annexe A :

$$\Delta V_{SK} = \Delta V_{NE} + \Delta V_{NW} + \Delta V_{SE} + \Delta V_{SW} \quad \text{(A3)}$$

La durée finie de l'intervalle de poussée (« burn » en langue anglo-saxonne) des quatre poussées est calculé en utilisant l'approximation (A4) suivante, où m désigne la masse du satellite et F la poussée de l'engin à propulsion électrique :

$$\Delta t_{burn} \cong \frac{m\Delta V_{burn}}{F} \;(A4)$$

L'invention propose ainsi un système de tuyères à propulsion électrique dont le préréglage permet de réaliser efficacement toutes les fonctions de la vie d'un satellite, sans qu'il soit nécessaire de prévoir de mécanisme additionnel dans le satellite. Il en résulte un gain de masse important et des coûts réduits.

Bien entendu, la présente invention n'est pas limitée aux exemples et modes de réalisation décrits et représentés, et est susceptible de nombreuses variantes accessibles à l'homme de l'art. En particulier, l'invention a été décrite en référence à un système de 6 tuyères mais peut inclure un nombre supérieur de tuyères selon les besoins inhérents au satellite.

Différents critères peuvent être appliqués pour le choix du nombre de tuyères dans chaque ensemble 101 ou 102. Par exemple, si un temps de transfert réduit est souhaité, il est possible d'augmenter le nombre de tuyères de l'ensemble 102 (par exemple 4). Par ailleurs, pour définir la stratégie de remplacement en cas d'anomalie d'une tuyère de l'ensemble de maintien en poste 101, un nombre supérieur de tuyères supérieur à 4 peut être choisi pour l'ensemble de tuyères 101.

Bien que la description ci-avant ait été faite en relation à un ensemble de tuyères 100 comprenant le premier ensemble 101 et le deuxième ensemble 102, dans certaines formes de réalisation de l'invention, le système de tuyères peut ne comporter que les tuyères N1, N2, S1 et S2 du premier ensemble, par exemple en cas d'injection directe par un lanceur commercial sur l'orbite géostationnaire qui ne nécessite pas de mise à poste.

Dans les formes de réalisation où l'ensemble des tuyères 100 comprend à la fois le premier ensemble 101 et le deuxième ensemble 102, l'homme du métier notera que la direction de poussée résultante de l'ensemble 102 peut se situer sur d'autres axes de satellite selon les contraintes d'aménagement existantes sur le satellite.

Par ailleurs, dans la description ci-avant des exemples de valeurs ont été donné pour les angles d'inclinaison θ et σ. Toutefois, l'invention s'applique à d'autres valeurs.

ANNEXE A

Résolution du problème du maintien en poste pour l'exemple de configuration de la figure 3

(A1)

$$\begin{bmatrix} \dfrac{\Delta a}{a} \\ \Delta e_x \\ \Delta e_y \\ \Delta i_x \\ \Delta i_y \end{bmatrix} = \begin{bmatrix} \dfrac{2}{V} & 0 \\ \dfrac{2\cos L_{NE}}{V} & 0 \\ \dfrac{2\sin L_{NE}}{V} & 0 \\ 0 & \dfrac{\cos L_{NE}}{V} \\ 0 & \dfrac{\sin L_{NE}}{V} \end{bmatrix} \times \begin{bmatrix} -\sin\theta \\ -\cos\theta \end{bmatrix} \Delta V_{NE} + \begin{bmatrix} \dfrac{2}{V} & 0 \\ \dfrac{2\cos L_{NW}}{V} & 0 \\ \dfrac{2\sin L_{NW}}{V} & 0 \\ 0 & \dfrac{\cos L_{NW}}{V} \\ 0 & \dfrac{\sin L_{NW}}{V} \end{bmatrix} \times \begin{bmatrix} +\sin\theta \\ -\cos\theta \end{bmatrix} \Delta V_{NW} + \ldots$$

$$\ldots + \begin{bmatrix} \dfrac{2}{V} & 0 \\ \dfrac{2\cos L_{SE}}{V} & 0 \\ \dfrac{2\sin L_{SE}}{V} & 0 \\ 0 & \dfrac{\cos L_{SE}}{V} \\ 0 & \dfrac{\sin L_{SE}}{V} \end{bmatrix} \times \begin{bmatrix} -\sin\theta \\ +\cos\theta \end{bmatrix} \Delta V_{SE} + \begin{bmatrix} \dfrac{2}{V} & 0 \\ \dfrac{2\cos L_{SW}}{V} & 0 \\ \dfrac{2\sin L_{SW}}{V} & 0 \\ 0 & \dfrac{\cos L_{SW}}{V} \\ 0 & \dfrac{\sin L_{SW}}{V} \end{bmatrix} \times \begin{bmatrix} +\sin\theta \\ +\cos\theta \end{bmatrix} \Delta V_{SW}$$

(A2)

$$\begin{bmatrix} \dfrac{\Delta a}{a} \\ \Delta e_x \\ \Delta e_y \\ \Delta i_x \\ \Delta i_y \end{bmatrix} = \begin{bmatrix} \dfrac{-2\sin\theta}{V} & \dfrac{+2\sin\theta}{V} & \dfrac{-2\sin\theta}{V} & \dfrac{+2\sin\theta}{V} \\ \dfrac{-2\sin\theta}{V}\cos L_{NE} & \dfrac{+2\sin\theta}{V}\cos L_{NW} & \dfrac{-2\sin\theta}{V}\cos L_{SE} & \dfrac{+2\sin\theta}{V}\cos L_{SW} \\ \dfrac{-2\sin\theta}{V}\sin L_{NE} & \dfrac{+2\sin\theta}{V}\sin L_{NW} & \dfrac{-2\sin\theta}{V}\sin L_{SE} & \dfrac{+2\sin\theta}{V}\sin L_{SW} \\ \dfrac{-\cos\theta}{V}\cos L_{NE} & \dfrac{-\cos\theta}{V}\cos L_{NW} & \dfrac{+\cos\theta}{V}\cos L_{SE} & \dfrac{+\cos\theta}{V}\cos L_{SW} \\ \dfrac{-\cos\theta}{V}\sin L_{NE} & \dfrac{-\cos\theta}{V}\sin L_{NW} & \dfrac{+\cos\theta}{V}\sin L_{SE} & \dfrac{+\cos\theta}{V}\sin L_{SW} \end{bmatrix} \times \begin{bmatrix} \Delta V_{NE} \\ \Delta V_{NW} \\ \Delta V_{SE} \\ \Delta V_{SW} \end{bmatrix}$$

(A3)
Fonction d'objectif pour minimiser la somme des amplitudes des 4 poussées :

$$\Delta V_{SK} = \Delta V_{NE} + \Delta V_{NW} + \Delta V_{SE} + \Delta V_{SW}$$

(A4) Durée finie de l'intervalle de poussée (« burn » en langue anglo-saxonne) des quatre poussées :

$$\Delta t_{burn} \cong \frac{m\Delta V_{burn}}{F}$$

**Revendications**

1. Système de tuyères (100) pour un satellite destiné à être stabilisé en autorotation sur une orbite géostationnaire, ledit satellite comportant trois axes de référence X, Y et Z, l'axe Y représentant l'axe Nord/Sud et l'axe Z correspondant à une direction de pointage terre, comprenant un premier ensemble de tuyères (101) configuré pour réaliser le maintien en poste du satellite, le premier ensemble comprenant un nombre pair de tuyères à propulsion électrique, à orientation préréglée, ledit nombre pair étant au moins égal à 4, ledit premier ensemble de tuyères comprenant une paire de tuyères de chaque côté du plan XZ, **caractérisé en ce que** lesdites tuyères sont orientées selon trois composantes spatiales, les deux tuyères de chaque paire ayant des signes de composantes X différents et des composantes Y de même signe, deux tuyères appartenant à deux paires différentes ayant des composantes Y de signe différent.

2. Système de tuyères selon la revendication 1, **caractérisé en ce que** la position des tuyères du premier ensemble est choisie de sorte que les tuyères passent au voisinage du centre de gravité du satellite en conservant un couple limité par rapport à la capacité des roues à inerties du satellite.

3. Système de tuyères selon la revendication 2, **caractérisé en ce que** la position des tuyères est en outre choisie de manière à tenir compte du déplacement du centre de gravité du satellite pendant la durée de vie du satellite.

4. Système de tuyère selon l'une des revendications précédentes, **caractérisé en ce qu'**il comprend un deuxième ensemble de tuyères (102) comprenant au moins deux tuyères à propulsion électrique, ledit deuxième ensemble de tuyères étant configuré pour réaliser au moins la mise en poste du satellite, les tuyères du deuxième ensemble étant orientées sensiblement suivant le même axe satellite.

5. Système de tuyères (100) selon l'une des revendications précédentes, **caractérisé en ce que** chaque tuyère du premier ensemble (101) forme un angle d'inclinaison θ choisi par rapport à l'axe Y.

6. Système de tuyères selon la revendication 5, **caractérisé en ce que** les tuyères du premier ensemble (101) présentent des angles d'inclinaison θ sensiblement identiques par rapport à l'axe Y.

7. Système de tuyères selon la revendication 1 à 5, **caractérisé en ce que** les tuyères du premier ensemble (101) présentent des angles d'inclinaison θ différents, par rapport à l'axe Y.

8. Système de tuyères selon l'une des revendications précédentes, **caractérisé en ce que** le premier ensemble de tuyères (101) comprend une tuyère agencée sur l'arête délimitée par les faces Nord (210) et Est (214) de la caisse du satellite (20).

9. Système de tuyères selon l'une des revendications précédentes, **caractérisé en ce que** le premier ensemble de tuyères (101) comprend une tuyère agencée sur l'arête délimitée par les faces Sud (212) et Est (214) de la caisse du satellite (20).

10. Système de tuyères selon l'une des revendications précédentes, **caractérisé en ce que** le premier ensemble de tuyères (101) comprend une tuyère agencée sur la face Nord (210) au voisinage de l'arête délimitée par les faces Nord 210 et Ouest 216.

11. Système de tuyères selon l'une des revendications précédentes, **caractérisé en ce que** le premier ensemble de tuyères (101) comprend une tuyère agencée sur la face Sud (212) au voisinage de l'arête délimitée par les faces Sud (212) et Est (214) de la caisse du satellite (20).

12. Système de tuyères selon l'une des revendications précédentes, **caractérisé en ce que** le premier ensemble de tuyères (101) comprend une tuyère agencée sur la face Est (214) de la caisse du satellite au voisinage de l'arête délimitée par les faces Sud (212) et Est (214) de la caisse du satellite.

13. Système de tuyères selon l'une des revendications précédentes, **caractérisé en ce que** le premier ensemble de tuyères (101) comprend une tuyère agencée sur la face Ouest de la caisse du satellite (216) au voisinage de l'arête délimitée par les faces Sud (212) et Ouest (216) de la caisse du satellite.

14. Système de tuyères selon l'une des revendications précédentes, **caractérisé en ce que** les tuyères du premier ensemble (101) sont non-coplanaires.

15. Système de tuyères selon l'une des revendications précédentes, **caractérisé en ce qu'**au moins une des tuyères du premier ensemble (101) forme un angle de pivotement σ par rapport au plan YZ.

16. Système de tuyères selon l'une des revendications précédentes, **caractérisé en ce que** les tuyères du premier ensemble (101) ont des angles de pivotement σ respectifs par rapport au plan YZ différents.

17. Système de tuyères selon l'une des revendications 15 et 16, **caractérisé en ce que** le premier ensemble de tuyères (101) comprend au moins une tuyère agencée au voisinage d'un coin externe de la caisse du satellite (20).

18. Système de tuyères selon l'une des revendications précédentes, **caractérisé en ce que** le satellite (10) comprend des roues à inertie, et **en ce que** le premier ensemble de tuyères (101) est utilisé pour réaliser le contrôle du vecteur du moment cinétique en cas de désaturation des roues à inertie.

19. Procédé de contrôle d'orbite et d'attitude pour un satellite géostationnaire, comprenant un système de tuyères selon l'une des revendications 1 à 18, **caractérisé en ce qu'**il comprend l'allumage des tuyères du premier ensemble indépendamment les unes des autres pendant le maintien en poste.

20. Procédé selon la revendication 19, **caractérisé en ce que** le maintien à poste est réalisé sur un nombre de jours de contrôle donné, et **en ce que** le procédé comprend, pour chaque jour de contrôle, le placement d'une tuyère du premier ensemble de tuyères (101) à une position orbitale donnée, en appliquant une durée de poussée choisie de telle sorte que la correction nette des éléments orbitaux à la fin de la journée soit égale à un vecteur de correction cible.

21. Procédé selon l'une des revendications 19 et 20, **caractérisé en ce qu'**il comprend l'activation des tuyères du deuxième ensemble de tuyères (102) dans l'une au moins des phases suivantes parmi les phases de vie du satellite : repositionnement du satellite, la mise en orbite stable en fin de vie du satellite.

22. Procédé selon la revendication 21, **caractérisé en ce qu'**il comprend l'allumage simultané des tuyères du deuxième ensemble de tuyères (102).

**Patentansprüche**

1. Düsensystem (100) für einen Satelliten, der dazu bestimmt ist, in Autorotation in einer geostationären Umlaufbahn stabilisiert zu werden, wobei der Satellit drei Bezugsachsen X, Y und Z hat, wobei die Y-Achse die Nord/Süd-Achse darstellt und die Z-Achse einer Ausrichtung zur Erde entspricht, das einen ersten Satz Düsen (101) umfasst, der so konfiguriert ist, dass er die Satellitenstation hält, wobei der erste Satz eine gerade Zahl elektrisch angetriebener Düsen mit einer voreingestellten Ausrichtung umfasst, wobei die gerade Zahl mindestens 4 ist, wobei der erste Düsensatz ein Paar Düsen auf jeder Seite der XZ-Ebene umfasst, **dadurch gekennzeichnet, dass** die Düsen gemäß drei Raumkomponenten ausgerichtet sind, wobei die beiden Düsen jedes Paars X-Komponenten mit unterschiedlichen Vorzeichen und Y-Komponenten mit demselben Vorzeichen haben, wobei zwei Düsen zu zwei unterschiedlichen Paaren gehören, die Y-Komponenten mit unterschiedlichen Vorzeichen haben.

2. Düsensystem nach Anspruch 1, **dadurch gekennzeichnet, dass** die Position der Düsen des ersten Satzes so gewählt ist, dass die Düsen in der Nähe des Schwerpunkts des Satelliten unter Beibehaltung eines in Bezug auf die Kapazität der Trägheitsräder des Satelliten begrenztes Drehmoment verlaufen.

3. Düsensystem nach Anspruch 2, **dadurch gekennzeichnet, dass** die Position der Düsen ferner so gewählt ist, dass die Verlagerung des Schwerpunkts des Satelliten während der Lebensdauer des Satelliten berücksichtigt wird.

4. Düsensystem nach einem der vorherigen Ansprüche, **dadurch gekennzeichnet, dass** es einen zweiten Satz Düsen (102) mit mindestens zwei elektrisch angetriebenen Düsen umfasst, wobei der zweite Düsensatz zum Durchführen von mindestens der Stationierung des Satelliten konfiguriert ist, wobei die Düsen des zweiten Satzes im Wesentlichen entlang derselben Satellitenachse ausgerichtet sind.

5. Düsensystem (100) nach einem der vorherigen Ansprüche, **dadurch gekennzeichnet, dass** jede Düse des ersten Satzes (101) einen relativ zur Y-Achse ausgewählten Neigungswinkel θ bildet.

6. Düsensystem nach Anspruch 5, **dadurch gekennzeichnet, dass** die Düsen des ersten Satzes (101) im Wesentlichen identische Neigungswinkel θ relativ zur Y-Achse aufweisen.

7. Düsensystem nach den Ansprüchen 1 bis 5, **dadurch gekennzeichnet, dass** die Düsen des ersten Satzes (101) unterschiedliche Neigungswinkel θ relativ zur Y-Achse aufweisen.

8. Düsensystem nach einem der vorherigen Ansprüche, **dadurch gekennzeichnet, dass** der erste Düsensatz (101) eine Düse umfasst, die auf der durch die Nord- (210) und Ostfläche (214) des Satellitenkörpers (20) begrenzten Kante angeordnet ist.

9. Düsensystem nach einem der vorherigen Ansprüche, **dadurch gekennzeichnet, dass** der erste Düsensatz (101) eine Düse umfasst, die auf der durch die Süd- (212) und Ostfläche (214) des Satellitenkörpers (20) begrenzten Kante angeordnet ist.

10. Düsensystem nach einem der vorherigen Ansprüche, **dadurch gekennzeichnet, dass** der erste Düsensatz (101) eine Düse umfasst, die auf der Nordfläche (210) in der Nähe der durch die Nord- 210 und die Westfläche 216 begrenzten Kante angeordnet ist.

11. Düsensystem nach einem der vorherigen Ansprüche, **dadurch gekennzeichnet, dass** der erste Düsensatz (101) eine Düse umfasst, die auf der Südfläche (212) in der Nähe des durch die Süd- (212) und die Ostfläche (214) des Satellitenkörpers (20) begrenzten Kante angeordnet ist.

12. Düsensystem nach einem der vorherigen Ansprüche, **dadurch gekennzeichnet, dass** der erste Düsensatz (101) eine Düse umfasst, die auf der Ostfläche (214) des Satellitenkörpers in der Nähe der durch die Süd- (212) und die Ostfläche (214) des Satellitenkörpers begrenzten Kante angeordnet ist.

13. Düsensystem nach einem der vorherigen Ansprüche, **dadurch gekennzeichnet, dass** der erste Düsensatz (101) eine Düse umfasst, die auf der Westfläche des Satellitenkörpers (216) in der Nähe der durch die Süd- (212) und die Westfläche (216) des Satellitenkörpers begrenzten Kante angeordnet ist.

14. Düsensystem nach einem der vorherigen Ansprüche, **dadurch gekennzeichnet, dass** die Düsen des ersten Satzes (101) nicht koplanar sind.

**15.** Düsensystem nach einem der vorherigen Ansprüche, **dadurch gekennzeichnet, dass** mindestens eine der Düsen des ersten Satzes (101) einen Schwenkwinkel σ relativ zur YZ-Ebene bildet.

**16.** Düsensystem nach einem der vorherigen Ansprüche, **dadurch gekennzeichnet, dass** die Düsen des ersten Satzes (101) jeweilige unterschiedliche Schwenkwinkel σ relativ zur YZ-Ebene aufweisen.

**17.** Düsensystem nach einem der Ansprüche 15 und 16, **dadurch gekennzeichnet, dass** der erste Düsensatz (101) mindestens eine Düse umfasst, die in der Nähe einer äußeren Ecke des Satellitenkörpers (20) angeordnet ist.

**18.** Düsensystem nach einem der vorherigen Ansprüche, **dadurch gekennzeichnet, dass** der Satellit (10) Trägheitsräder aufweist, und dadurch, dass der erste Düsensatz (101) zum Realisieren der Steuerung des Vektors des Drehimpuls im Falle einer Entsättigung der Trägheitsräder verwendet wird.

**19.** Verfahren zur Umlaufbahn- und Lageregelung für einen geostationären Satelliten mit einem Düsensystem nach einem der Ansprüche 1 bis 18, **dadurch gekennzeichnet, dass** es das Zünden der Düsen des ersten Satzes unabhängig voneinander während der Stationshaltung beinhaltet.

**20.** Verfahren nach Anspruch 19, **dadurch gekennzeichnet, dass** die Stationshaltung über eine gegebene Anzahl von Prüftagen realisiert wird, und dadurch, dass das Verfahren für jeden Prüftag das Platzieren einer Düse des ersten Düsensatzes (101) an einer gegebenen Position der Umlaufbahn mittels einer Schubdauer beinhaltet, die so gewählt ist, dass die Nettokorrektur der Umlaufbahnelemente am Ende des Tages gleich einem Zielkorrekturvektor ist.

**21.** Verfahren nach einem der Ansprüche 19 und 20, **dadurch gekennzeichnet, dass** es die Aktivierung der Düsen des zweiten Düsensatzes (102) in mindestens einer der folgenden Phasen unter den Lebensdauerphasen des Satelliten umfasst: Neupositionierung des Satelliten, Bringen des Satelliten in eine stabile Umlaufbahn am Ende der Lebensdauer des Satelliten.

**22.** Verfahren nach Anspruch 21, **dadurch gekennzeichnet, dass** es das gleichzeitige Zünden der Düsen des zweiten Düsensatzes (102) beinhaltet.

**Claims**

**1.** Thrust nozzle system (100) for a satellite intended to be stabilized in autorotation over a geostationary orbit, the said satellite comprising three reference axes X, Y and Z, the Y axis representing the north/south axis and the Z axis corresponding to a pointing direction towards Earth, comprising a first set of thrust nozzles (101) configured for maintaining the satellite in station, the first set comprising an even number of thrust nozzles using electrical propulsion, with a pre-adjusted orientation, the said even number being equal to at least 4, the said first set of thrust nozzles comprising a pair of thrust nozzles on either side of the XZ plane, **characterized in that** the said thrust nozzles are oriented along three spatial components, both thrust nozzles of each pair having X components of different signs and Y components of the same sign, two thrust nozzles belonging to two different pairs having Y components of different sign.

**2.** Thrust nozzle system according to claim 1, **characterized in that** the position of the thrust nozzles of the first set is chosen such that the thrust nozzles pass in the neighbourhood of the centre of gravity of the satellite while conserving a limited torque with respect to the capacity of the flywheels of the satellite.

**3.** Thrust nozzle system according to claim 2, **characterized in that** the position of the thrust nozzles is furthermore chosen in such a manner as to take into account the displacement of the centre of gravity of the satellite over the lifetime of the satellite.

**4.** Thrust nozzle system according to one of the preceding claims, **characterized in that** it comprises a second set of thrust nozzles (102) comprising at least two thrust nozzles using electrical propulsion, the said second set of thrust nozzles being configured for implementing at least the setting into station of the satellite, the thrust nozzles of the second set being oriented substantially along the same satellite axis.

5. Thrust nozzle system (100) according to one of the preceding claims, **characterized in that** each thrust nozzle of the first set (101) forms a chosen angle of inclination θ with respect to the Y axis.

6. Thrust nozzle system according to claim 5, **characterized in that** the thrust nozzles of the first set (101) have angles of inclination θ that are substantially identical with respect to the Y axis.

7. Thrust nozzle system according to claim 1 to 5, **characterized in that** the thrust nozzles of the first set (101) have different angles of inclination θ with respect to the Y axis.

8. Thrust nozzle system according to one of the preceding claims, **characterized in that** the first set of thrust nozzles (101) comprises a thrust nozzle arranged on the edge bounded by the north face (210) and east face (214) of the body of the satellite (20).

9. Thrust nozzle system according to one of the preceding claims, **characterized in that** the first set of thrust nozzles (101) comprises a thrust nozzle arranged on the edge bounded by the south face (212) and east face (214) of the body of the satellite (20).

10. Thrust nozzle system according to one of the preceding claims, **characterized in that** the first set of thrust nozzles (101) comprises a thrust nozzle arranged on the north face (210) in the neighbourhood of the edge bounded by the north face 210 and west face 216.

11. Thrust nozzle system according to one of the preceding claims, **characterized in that** the first set of thrust nozzles (101) comprises a thrust nozzle arranged on the south face (212) in the neighbourhood of the edge bounded by the south face (212) and east face (214) of the body of the satellite (20).

12. Thrust nozzle system according to one of the preceding claims, **characterized in that** the first set of thrust nozzles (101) comprises a thrust nozzle arranged on the east face (214) of the body of the satellite in the neighbourhood of the edge bounded by the south face (212) and east face (214) of the body of the satellite.

13. Thrust nozzle system according to one of the preceding claims, **characterized in that** the first set of thrust nozzles (101) comprises a thrust nozzle arranged on the west face of the body of the satellite (216) in the neighbourhood of the edge bounded by the south face (212) and west face (216) of the body of the satellite.

14. Thrust nozzle system according to one of the preceding claims, **characterized in that** the thrust nozzles of the first set (101) are non-coplanar.

15. Thrust nozzle system according to one of the preceding claims, **characterized in that** at least one of the thrust nozzles of the first set (101) forms a pivot angle σ with respect to the YZ plane.

16. Thrust nozzle system according to one of the preceding claims, **characterized in that** the thrust nozzles of the first set (101) have respective different pivot angles σ with respect to the YZ plane.

17. Thrust nozzle system according to either of claims 15 and 16, **characterized in that** the first set of thrust nozzles (101) comprises at least one thrust nozzle arranged in the neighbourhood of an external corner of the body of the satellite (20).

18. Thrust nozzle system according to one of the preceding claims, **characterized in that** the satellite (10) comprises flywheels, and **in that** the first set of thrust nozzles (101) is used to perform the control of the vector of the angular momentum in the case of unsaturation of the flywheels.

19. Method for the orbit and attitude control of a geostationary satellite, comprising a thrust nozzle system according to one of claims 1 to 18, **characterized in that** it comprises the ignition of the thrust nozzles of the first set independently of one another while the satellite is maintained in station.

20. Method according to claim 19, **characterized in that** maintaining the satellite in station is carried out over a given number of control days, and **in that** the method comprises, for each control day, the placing of a thrust nozzle from the first set of thrust nozzles (101) at a given orbital position, by applying a duration of thrust chosen in such a manner that the net correction of the orbital elements at the end of the day is equal to a target correction vector.

**21.** Method according to either of claims 19 and 20, **characterized in that** it comprises the activation of the thrust nozzles of the second set of thrust nozzles (102) in at least one of the following phases amongst the phases of life of the satellite: repositioning of the satellite, the setting into stable orbit at the end-of-life of the satellite.

**22.** Method according to claim 21, **characterized in that** it comprises the simultaneous ignition of the thrust nozzles of the second set of thrust nozzles (102).

FIGURE 1

**FIGURE 2**

**FIGURE 3**

Calcul des propriétés des quatre manœuvres de maintien en poste (400)

Calcul des propriétés d'une poussée additionnelle pour le contrôle du vecteur moment cinétique (402)

MISE A JOUR (404)

**FIGURE 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9209479 A